# FASCICULE DE BREVET EUROPEEN

(11) **EP 1 769 222 B1**
(45) Date de publication et mention de la délivrance du brevet: **25.01.2017**
(21) Numéro de dépôt: 05782427.8
(22) Date de dépôt: 16.06.2005
(51) Int. Cl.: G01D 13/00

(54) **INDICATEUR A CADRAN A EFFET DE RELIEF**
DREIDIMENSIONALE WIRKUNGSANZEIGESKALA
THREE-DIMENSIONAL EFFECT INDICATOR DIAL

(30) Priorité: 23.06.2004 FR 0406826
(43) Date de publication de la demande: 04.04.2007
(73) Titulaire: Johnson Controls Technology Company, Holland, MI 49423 (US)
(72) Inventeur: FOURNIER, Joël, F-95800 Cergy (FR)
(74) Mandataire: Gevers & Orès
(86) Numéro de dépôt international: PCT/FR2005/001507
(87) Numéro de publication internationale: WO 2006/008370

(56) Documents cités:
- EP-A- 0 345 727
- US-A- 3 712 262
- PATENT ABSTRACTS OF JAPAN vol. 009, no. 072 (P-345), 2 avril 1985 (1985-04-02) & JP 59 203919 A (NIPPON DENSO KK; others: 01), 19 novembre 1984 (1984-11-19)

## Description

L'invention concerne un indicateur, en particulier un indicateur de tableau de bord de véhicule automobile ou de tout autre engin de locomotion.

La planche de bord d'un véhicule automobile comprend généralement un tableau de bord, situé face au conducteur, qui comprend un ensemble d'indicateurs, par exemple un indicateur de vitesse, un indicateur compte-tours du moteur, un indicateur de niveau d'essence, et notamment des indicateurs à aiguille.

L'aiguille d'un indicateur, commandée et entraînée en rotation par un moteur, ou mouvement, s'étend généralement devant un masque sérigraphié formant cadran, portant des caractères d'indications (des graduations et des valeurs, notamment). L'indicateur est monté dans un réhaut d'habillage servant de protection et de cache et supportant une vitre de protection.

A des fins esthétiques, on peut souhaiter donner à une zone d'un cadran une apparence de relief à trois dimensions, que l'on nommera par la suite 3D. A cet effet, certains caractères d'indication sont agencés pour s'étendre en relief par rapport au cadran. Typiquement, les graduations s'étendant en périphérie des chiffres définissant leur valeur peuvent être mises en relief par rapport à eux.

Actuellement, l'effet 3D est obtenu par une sérigraphie à plat du cadran suivie d'un thermoformage de la périphérie de ce dernier en relief. Toutefois, ce procédé est coûteux et l'effet rendu n'est pas optimal puisque de face, l'effet 3D n'est pas très visible.

L'invention vise à proposer un cadran à effet 3D mieux rendu, qui soit moins coûteux en termes de réalisation.

A cet effet, l'invention concerne un indicateur, comprenant un cadran comportant des caractères d'indication, une aiguille indicatrice, montée rotative par rapport au cadran sur un axe d'un moteur d'entraînement, caractérisé par le fait que le cadran est supporté par un support qui supporte sur sa face avant une pièce volumique partiellement translucide agencée pour donner un effet de relief en vue de devant pour certains des caractères du cadran.

Grâce à l'invention, la portion du support de cadran vue au travers de la pièce volumique apparaît en relief pour l'observateur de l'indicateur. La pièce volumique joue un rôle de prisme qui assure un bon rendu de l'effet de relief 3D. En outre, la sérigraphie du cadran est effectuée à plat et la pièce volumique est rapportée sur la surface du support de cadran, ce qui engendre des coûts de réalisation réduits par rapport à l'art antérieur.

De préférence, la pièce volumique est une pièce pleine.

De préférence encore, la portion du support de cadran supportant la pièce volumique est située le long de la périphérie du support de cadran et la pièce volumique est une bague partiellement translucide.

Avantageusement dans ce cas, la bague comporte un pan incliné interne translucide et un pan incliné externe opaque.

Avantageusement encore, les caractères de la portion de périphérie du masque sont des graduations.

L'invention s'applique particulièrement à un indicateur de tableau de bord de véhicule automobile ou de tout autre engin de locomotion, mais la demanderesse n'entend pas limiter la portée de ses droits à cette application.

L'invention s'applique ainsi à d'autres types d'indicateurs, par exemple des indicateurs portables, tel que des ampèremètres, des manomètres, des montres, ...

L'invention sera mieux comprise à l'aide de la description suivante de la forme de réalisation préférée de l'indicateur de l'invention, en référence au dessin annexé, sur lequel :
- la figure 1 représente une vue de face de la forme de réalisation préférée de l'indicateur de l'invention ;
- la figure 2 représente une vue partielle schématique en coupe d'une portion périphérique de l'indicateur de la figure 1 et
- la figure 3 représente une vue en coupe axiale de l'indicateur de la figure 1.

L'indicateur 1 qui va être décrit est ici un indicateur de tableau de bord d'un véhicule automobile. Il fait partie d'un ensemble d'indicateurs contenus dans le tableau de bord, qui comporte en l'espèce une vitre de protection tenue par un réhaut d'habillage, non représentés. Le réhaut sert également de cache aux indicateurs. Il comprend une partie formant un conduit globalement transversal à la vitre de protection, s'étendant vers l'arrière et assurant la liaison avec le support des indicateurs. Il comporte une autre partie, appelée fond de réhaut, ou façade, 2, couvrant le support des indicateurs ; la façade forme en quelque sorte un masque au travers duquel on ne voit que les indicateurs, par des évidements prévus à leurs positions.

Dans la suite de la description, on considérera que l'avant est dirigé vers le conducteur du véhicule, de façon plus générale dans la direction de l'observateur de l'indicateur. Un seul indicateur sera ici décrit.

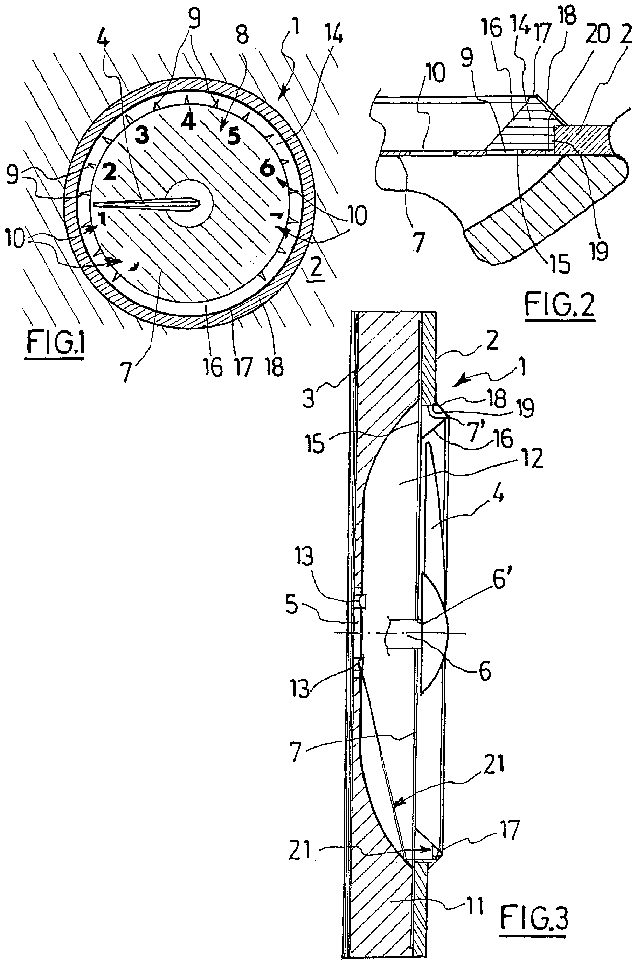

En référence à la figure 3, à l'arrière de la façade 2 s'étend, parallèlement à cette dernière, une carte de circuit imprimé 3. A l'anière de la carte 3 est placé un moteur, non représenté, d'entraînement en rotation d'une aiguille indicatrice 4. La carte 3 est percée d'un orifice de passage d'un axe d'entraînement de l'aiguille 4, par l'intermédiaire d'un moyeu 6. Cet axe du moteur s'étend perpendiculairement à l'aiguille 4 et à la carte 3. Le moteur commande l'aiguille 4 et l'entraîne en rotation dans un plan parallèle à la carte 3.

L'aiguille 4 s'étend devant un cadran circulaire 8 sérigraphié sur la face avant 7 de l'indicateur 1, logée dans un évidement 7' de la façade 2. Un orifice 6' est prévu dans la face avant 7, pour le passage du moyeu 6 de l'aiguille 4. La face avant 7 est ici en polycarbonate. En référence aux figures 1 et 2, le cadran 8 comporte des caractères d'indications, en l'espèce des graduations 9 formant une échelle de comptage et des valeurs 10 de nombres de tours du moteur du véhicule, en milliers, ci-après nommées chiffres 10. L'indicateur 1 est ici un indicateur compte-tours du moteur.

Les graduations 9 sont réparties à la périphérie de la face avant 7 support du cadran, à proximité de sa bordure, le long d'une courbe en arc de cercle. Les chiffres 10 sont placés concentriquement aux graduations 9, auxquelles ils donnent des valeurs. Ils sont régulièrement répartis, par exemple un chiffre 10 pour une graduation 9 sur deux.

La façade 2 est supportée par une boîte à lumière 11 ménageant, derrière le cadran 7, 8 une cavité 12 de forme appropriée, ici en forme de coupelle, pour guider la lumière sur l'ensemble de l'anière de la face avant 7. Hors du fond de la boîte à lumière 12 font saillie des moyens d'éclairage 13, ici des diodes électroluminescentes (LED), en l'espèce au nombre de quatre. Elles sont fixées mécaniquement et électriquement sur la carte de circuit imprimé 3, au niveau d'un orifice 5 dans la boîte à lumière 11 de passage du moyeu d'aiguille 6.

En référence à la figure 2, la sérigraphie du cadran 8 est appliquée sur la face avant 7 de telle manière que les chiffres 10 et les graduations 9 apparaissent translucides. La face avant 7 est translucide tandis que l'encre opaque de la sérigraphie est répartie tout autour des caractères 9, 10, de façon à ce qu'ils soient dessinés par lacune d'encre par rapport à leur contour. Ils peuvent également être dessinés par une encre translucide tandis que leur contour est dessiné en encre opaque. Quoi qu'il en soit, les caractères 9, 10 sont ainsi visibles de jour ; de nuit, lorsqu'ils sont éclairés par l'arrière par la boîte à lumière 12, ils apparaissent lumineux sur le cadran 8, puisqu'ils sont translucides.

Comme on a désiré faire apparaître les graduations 9 en relief par rapport aux chiffres 10, on a placé, sur la face avant 7, de son côté avant, une bague 14 en partie translucide. La bague 14 s'étend le long de la périphérie de la face avant 7, tout du moins le long de l'arc de cercle comprenant les graduations 9. Elle est ici annulaire. Elle comporte une face arrière 15, plaquée sur la face avant 7, un pan incliné interne (tronconique) 16 s'étendant vers l'avant et l'extérieur, jusqu'à une arrête circulaire avant 17 de la bague 14, et un pan incliné externe (tronconique) 18, s'étendant vers l'arrière et vers l'extérieur depuis l'arrête avant 17. Le pan externe 18 s'arrête environ à mi-hauteur de la bague 14, qui comporte à cet endroit un renfoncement circonférentiel 19 formant épaulement pour les faces interne et avant de la façade 2. La bague 14 est donc placée en appui sur la face avant 7 et les faces interne et avant de la façade 2 ; elle y est ici collée.

La bague 14 est constituée essentiellement d'un matériau translucide plein sur l'ensemble de son volume, par exemple en verre ou en plexiglas. Le pan incliné interne 16 et la face arrière 15 sont translucides, tandis que le pan incliné externe 18 et le sommet 17 sont recouverts d'un revêtement surfacique opaque.

La face arrière 15 est agencée pour recouvrir intégralement les graduations 9 du cadran 8. De nuit, ces dernières, éclairées par l'arrière, laissent passer la lumière dans le prisme formé par la bague 14 et apparaissent, vus de l'avant, par le pan incliné interne 16. Elles donnent donc l'impression d'être en relief sur le cadran 8 et assurent ainsi un effet 3D. Cet effet 3D est même mieux rendu que si des graduations étaient peintes sur un pan incliné, car la lumière passant dans le prisme fait apparaître les graduations 9 en volume. De jour, on observe le même effet 3D, les graduations n'étant pas éclairées par l'arrière mais par la lumière ambiante passant par le pan incliné interne 16, ce qui revient au même car, de toute façon, de la lumière émerge des graduations 9 ; dans ce dernier cas, la lumière émergente est la lumière réfléchie de la lumière ambiante.

On comprend l'intérêt d'avoir utilisé une bague 14 pleine, qui est d'éviter d'avoir une double image des graduations 9 en cas de transmission de la lumière à travers une paroi.

En référence aux figures 2 et 3, afin d'améliorer la luminosité de la bague lorsqu'elle est éclairée par l'arrière, on peut prévoir, le long du bord périphérique du support de cadran 7, un anneau 20 translucide, tant dans l'épaisseur du support 7 qu'au niveau du cadran sérigraphié 8, qui laisse passer la lumière de la même façon que les caractères 9, 10. Cet anneau 20 se trouve au droit du pan incliné externe opaque 18 et n'est donc pas vu de face par un observateur. En revanche, comme on le voit sur la figure 3, des rayons de lumières 21 peuvent être réfléchis sur le fond de la boîte à lumière 12, traverser l'anneau translucide 20 et être réfléchis sur la paroi intérieure du pan incliné externe 18 afin de donner une ambiance (légèrement) lumineuse à l'intérieur de la bague 14. L'anneau translucide 20 peut d'ailleurs être couvert d'un revêtement translucide de couleur afin que la lumière d'ambiance de l'intérieur de la bague 14 soit d'une couleur différente de celle des graduations 9.

Ainsi, grâce à l'invention, le cadran 8 apparaît avec une aiguille 4, qui peut être éclairée par tout moyen approprié, et des chiffres 10, donnant les valeurs de graduations 9 d'une échelle en relief et en volume, qui est pourtant sérigraphiée à plat sur la face avant 7. L'épaisseur de la bague 14 par rapport à la surface avant de la face avant 7 peut être la même que celle de l'aiguille 4, pour une meilleure homogénéité des composants en reliefs.

L'invention a été décrite en relation avec des graduations 9 translucides sur fond opaque, mais il va de soi qu'elles peuvent être opaques sur un fond translucide, l'effet 3D étant rendu de la même façon.

En outre, la sérigraphie du cadran pourrait être appliquée sur la face arrière de la face avant 7.

L'aiguille 4 pourrait également s'étendre à l'arrière de la face avant 7, ou encore être une aiguille recourbée n'apparaissant que sous la forme d'une extrémité indicatrice se déplaçant le long de la périphérie du cadran 8, qui serait adaptée par rapport à la bague 14 et à l'éclairage nécessaire.

Même si son opacité est souhaitable, car le rendu de l'effet 3D est meilleur, le pan incliné externe 18 pourrait être translucide.

La bague 14 est en fait une pièce volumique partiellement translucide placée sur une zone de caractères sérigraphiés plane pour donner un effet 3D aux caractères. Cette pièce n'est pas forcément une bague 14 s'étendant le long de la périphérie du cadran mais peut être de toute forme et placée sur toute zone, de façon adaptée à une application particulière.

## Revendications

1. Indicateur, comprenant un cadran (8) comportant des caractères d'indication (9, 10), une aiguille indicatrice (4), montée rotative par rapport au cadran (8) sur un axe (6) d'un moteur d'entraînement, **caractérisé par le fait que** le cadran (8) est supporté par un support (7) qui supporte sur une face avant une pièce volumique (14) partiellement translucide, ladite face avant étant située le long de la périphérie du support (7) et la pièce volumique (14) étant une bague partiellement translucide comportant un pan incliné interne translucide (16) s'étendant vers l'avant et l'extérieur, jusqu'à une arête circulaire avant (17) de la bague, et un pan incliné externe opaque (18), s'étendant vers l'arrière et vers l'extérieur depuis l'arête avant (17), de manière à donner un effet de relief en vue de devant pour certains des caractères (9) du cadran (8).

2. Indicateur selon la revendication 1, dans lequel la pièce volumique (14) est une pièce pleine.

3. Indicateur selon l'une des revendications 1 à 2, dans lequel les caractères de la portion de périphérie du support (7) sont des graduations (9).

4. Indicateur selon l'une des revendications 1 à 3, comportant des moyens d'éclairage (13) à l'arrière du support (7), la portion du support (7) supportant la pièce volumique (14) étant partiellement translucide.

5. Indicateur selon la revendication 4, dans lequel le support comporte un anneau périphérique translucide (20) agencé pour rendre la bague (14) plus lumineuse lorsque les moyens d'éclairage (13) sont allumés.

6. Indicateur selon l'une des revendications 4 ou 5, dans laquelle les caractères sont translucides sur un fond opaque.

7. Indicateur selon l'une des revendications 4 ou 5, dans laquelle les caractères (9, 10) sont opaques sur un fond translucide.

8. Indicateur selon l'une des revendications 1 à 7, qui est un indicateur de tableau de bord de véhicule automobile.

## Patentansprüche

1. Anzeiger, der ein Zifferblatt (8) umfasst, umfassend Anzeigezeichen (9, 10), einen Anzeigezeiger (4), der relativ zu dem Zifferblatt (8) um eine Achse (6) eines Antriebsmotors drehbar gelagert ist, **dadurch gekennzeichnet, dass** das Zifferblatt (8) von einem Träger (7) getragen wird, der einen teilweise durchscheinenden voluminösen Teil (14) auf seiner Vorderseite trägt, wobei sich die Vorderseite entlang des Umfangs des Trägers (7) befindet, und wobei der voluminöse Teil (14) ein teilweise durchscheinender Ring ist, der eine geneigte interne Senke (16), die sich nach vorne und nach außen bis zu einer kreisförmigen vorderen Kante (17) des Rings erstreckt, und eine äußere geneigte opake Senke (18) umfasst, die sich nach hinten und nach außen von der vorderen Kante (17) erstreckt, um so aus der Vorderansicht für bestimmte Zeichen (9) des Zifferblatts (8) einen Reliefeffekt zu bewirken.

2. Anzeiger nach Anspruch 1, wobei der voluminöse Teil (14) ein solider Teil ist.

3. Anzeiger nach einem der Ansprüche 1 bis 2, wobei die Zeichen des Teils des Umfangs des Trägers (7) Graduierungen (9) sind.

4. Anzeiger nach einem der Ansprüche 1 bis 3, der Beleuchtungsmittel (13) auf der Rückseite des Trägers (7) umfasst, wobei der Abschnitt des Trägers (7), der den voluminösen Teil (14) trägt, teilweise durchscheinend ist.

5. Anzeiger nach Anspruch 4, wobei der Träger einen durchscheinenden Umfangsring (20) umfasst, der eingerichtet ist, um den Ring (14) leuchtender zu machen, wenn die Beleuchtungsmittel (13) an sind.

6. Anzeiger nach einem der Ansprüche 4 oder 5, wobei die Zeichen auf einem opaken Hintergrund durchscheinend sind.

7. Anzeiger nach einem der Ansprüche 4 oder 5, wobei die Zeichen (9, 10) auf einem durchscheinenden Hintergrund opak sind.

8. Anzeiger nach einem der Ansprüche 1 bis 7, der ein Anzeiger von einem Armaturenbrett eines Kraftfahrzeugs ist.

## Claims

1. Indicator, comprising a gauge (8) including indicator characters (9, 10), an indicator needle (4), mounted rotatably with respect to the gauge (8) on an axis (6) of a drive motor, **characterised by** the fact that the gauge (8) is supported by a support (7) that supports, on a front face, a partially translucent three-dimensional part (14), said front face being located along the edge of the support (7) and the three-dimensional part (14) being a partially translucent ring comprising a translucent inner inclined face (16) extending forwards and towards the outside, up to a front circular edge (17) of the ring, and an opaque outer inclined face (18) extending rearwards and towards the outside from the front edge (17) in such way as to give a relief effect to some of the characters (9) of the gauge (8) when viewed from the front.

2. Indicator according to claim 1, wherein the three-dimensional part (14) is a solid part.

3. Indicator according to one of claims 1 to 2, wherein the characters of the edge portion of the support (7) are graduations (9).

4. Indicator according to one of claims 1 to 3, comprising lighting means (13) at the rear of the support (7), the portion of the support (7) supporting the three-dimensional part (14) being partially translucent.

5. Indicator according to claim 4, wherein the support comprises a translucent peripheral ring (20) arranged to make the ring (14) brighter when the lighting means (13) are turned on.

6. Indicator according to one of claims 4 and 5, wherein the characters are translucent on an opaque background.

7. Indicator according to one of claims 4 and 5, wherein the characters (9, 10) are opaque on a translucent background.

8. Indicator according to one of claims 1 to 7 that is an indicator of a motor vehicle dashboard.
